# EUROPÄISCHE PATENTSCHRIFT

(11) **EP 1 286 478 B1**
(45) Veröffentlichungstag und Bekanntmachung des Hinweises auf die Patenterteilung: **08.06.2005**
(21) Anmeldenummer: 02013102.5
(22) Anmeldetag: 13.06.2002
(51) Int. Cl.: H04B 5/02, G08C 17/02, E05F 15/00

(54) **Taktiles Sensorsystem mit Transponder**
Tactile Sensor System with Transponder
Système de capteur tactile avec transpondeur

(30) Priorität: 10.08.2001 DE 10140930
(43) Veröffentlichungstag der Anmeldung: 26.02.2003
(73) Patentinhaber: Mayser GmbH & Co., D-89073 Ulm (DE)
(72) Erfinder: Buttner, Manfred, 89165 Dietenheim (DE); Geigle, Peter, 89168 Niederstotzingen (DE)
(74) Vertreter: Patentanwälte Ruff, Wilhelm, Beier, Dauster & Partner

(56) Entgegenhaltungen:
- EP-A- 0 698 714
- EP-A- 0 784 215
- DE-A- 3 922 556
- DE-A- 19 814 460
- DE-C- 19 632 590

## Beschreibung

Die Erfindung bezieht sich auf ein taktiles Sensorsystem nach dem Oberbegriff des Anspruchs 1. Derartige Systeme werden beispielsweise als Schaltleistensysteme für Einklemmschutz mit einer Schaltleiste als taktilem Sensorelement und als Schaltmattensysteme zum Erkennen des Belegens oder Betretens flächiger Bereiche mit einer Schaltmatte als taktilem Sensorelement eingesetzt. Im Fahrzeugbau werden beispielsweise Einklemmschutzsysteme mit Schaltleiste an beweglichen Türen und Fenstern und Schaltmattensysteme zur Sitzbelegungserkennung verwendet. Das taktile Sensorelement weist typisch eine oder mehrere Stromschleifen als Sensorstromkreis auf, die optional mit Endwiderständen versehen sind, siehe z.B. die Patentschrift DE 196 32 590 C1.

Unter der Bezeichnung Vitector wird von der Firma Fraba ein taktiles Sensorsystem der eingangs genannten Art vom Schaltleistentyp für kraftbetätigte Schiebetore angeboten. Am bewegten Tor sind zwei Schaltleisten für Auf- und Zufahrt angeordnet, und an der bewegten Torkante ist ein Transponder montiert, der den Zustand der zwei Schaltleisten auswertet. An einer stationären Führungssäule des Tores ist ein Lesegerät mit zugehöriger Antennenspule angeordnet, das die vom Transponder über dessen Antennenspule gesendeten Informationen empfängt. Des weiteren kann das Lesegerät dazu dienen, den Zustand von stationären Schaltleisten auszuwerten, die an der Führungssäule angebracht sind. Die Transponderantenne erstreckt sich großflächig über das Tor hinweg, so dass es über den gesamten Verfahrweg des Tores an der Lesegerätantenne vorbei fährt, wobei der Abstand beider Antennen wenige Zentimeter nicht überschreiten darf. Da der Transponder bereits intelligente Auswertefunktionen für die torseitigen Schaltleisten übernimmt, ist ein solcher mit ausreichender Auswerteintelligenz beziehungsweise Auswertekapazität zu verwenden, und es ist entsprechend viel Energie über den drahtlosen Übertragungskanal vom Lesegerät zum Transponder zu übertragen, wenn dieser ohne eigene Energiequelle betrieben werden soll.

In der Offenlegungsschrift DE 198 14 460 A1 ist ein taktiles Sensorsystem z.B. als Endschaltersystem für ein Fahrzeugverdeck beschrieben, das einen in einem Gehäuse angeordneten Schalter mit einem Kontaktsystem umfasst, auf das ein in das Gehäuse reichendes, mechanisches Übertragungsmittel schaltend einwirkt. In dem Gehäuse ist zudem ein Transponder untergebracht, der direkt mit dem Schalter verbunden ist und eine Spulenantenne sowie eine z.B. als integrierte Schaltung realisierte Steuerschaltung beinhaltet. Über die Spulenantenne steht der Transponder durch einen drahtlosen Übertragungskanal mit einem Fahrzeugsteuergerät zur Energie- und Signalübertragung in Verbindung.

In der Offenlegungsschrift EP 0 784 215 A2 ist eine Sensoranordnung zur Erfassung von physikalischen Größen im Boden, im Wasser oder in anderen, insbesondere nichtmetallischen Medien beschrieben, die einen Schwingkreis umfasst, der an der zu untersuchenden Stelle platziert ist und ein variables Element aufweist, das mit einem Sensor zum Erfassen der physikalischen Größe in Wirkverbindung steht. Das mit der physikalischen Größe korrelierte Verhalten des Schwingkreises wird durch eine Empfangseinheit detektiert. In einer passiven Auslegung wird der Schwingkreis durch ein von außen gesendetes Signal angeregt und gibt daraufhin ein Sekundärsignal ab. In einer aktiven Auslegung gibt der Schwingkreis von sich aus z.B. in regelmäßigen Abständen ein Signal ab, das beispielsweise über einen mittels des Schwingkreises selbst aktivierbaren Transponder abgefragt werden kann, wobei der Transponder eine eigene Energieversorgung besitzt oder Energie aus dem gesendeten Signal bezieht.

Der Erfindung liegt als technisches Problem die Bereitstellung eines taktilen Sensorsystems der eingangs genannten Art zugrunde, das mit vergleichsweise einfachen Mitteln eine drahtlose Übertragung der Information über den Zustand des Sensorstromkreises des taktilen Sensorelementes mittels Transponder ermöglicht.

Die Erfindung löst dieses Problem durch die Bereitstellung eines taktilen Sensorsystems mit den Merkmalen des Anspruchs 1. Bei diesem taktilen Sensorsystem sind der Transponderbaustein und/oder die Transponderantenne im Inneren des taktilen Sensorelementes eingebaut, speziell innerhalb einer Einkleidung oder Ummantelung einer als taktiles Sensorelement fungierenden Schaltleiste oder Schaltmatte. Dies schützt die Transponderkomponenten vor äußeren Einflüssen und ermöglicht die Verwendung des Transponders als Ersatz einer drahtgebundenen Signalübertragung in herkömmlichen taktilen Sensorsystemen ohne weitere bauliche Veränderungen am Grundsystem, dem das taktile Sensorsystem zugeordnet ist, z.B. an einem Fahrzeug.

Beim nach Anspruch 2 weitergebildeten System wird ein einfacher, kostengünstig bereitzustellender Transponderbaustein verwendet, der ohne eigene Signalauswerteintelligenz als rein signalemittierendes Bauteil ausgelegt ist. Sein zu der Transponderantenne führender Stromkreis ist mit dem Sensorstromkreis des taktilen Sensorelementes elektrisch verbunden. Dadurch hat eine Änderung des elektrischen Widerstands und damit des Stromflusses des Sensorstromkreises Einfluss auf das vom Transponder über seine Antenne abgegebene Signal, so dass die Auswerteeinheit durch Auswertung dieses empfangenen Signals in der Lage ist, auf den Zustand des Sensorstromkreises zurückzuschließen, ohne dass der Transponder selbst irgendeine Auswertefunktion zu erfüllen braucht.

Beim nach Anspruch 3 weitergebildeten System beinhaltet der drahtlose Übertragungskanal zwischen Transponderseite und Auswerteseite zusätzlich zur Transponderantenne und auswerteseitigen Antenne wenigstens eine in den Sensorstromkreis eingeschleifte Beeinflussungsantenne, deren Wirkbereich mit dem Übertragungswirkbereich von Transponderantenne und auswerteseitiger Antenne überlappt. Dadurch wird die Signalübertragung vom Transponderbaustein zur Auswerteeinheit in Abhängigkeit vom Zustand des Sensorstromkreises beeinflusst, wodurch die Auswerteeinheit durch Auswertung des empfangenen Signals wiederum auf den Zustand des Sensorstromkreises zurückschließen kann. Auch in diesem Fall genügt die Verwendung eines einfachen Transponders in Form eines rein signalemittierenden Bauteils ohne eigene Signalauswerteintelligenz. Dies hat zusätzlich den Vorteil, dass vergleichsweise wenig Energie zum Betrieb des Transponders über den drahtlosen Übertragungskanal übertragen werden muss.

In einer Ausgestaltung dieses Systems sind nach Anspruch 4 zwei Beeinflussungsantennen parallel in den Sensorstromkreis eingeschleift, wodurch eine Redundanz bereitgestellt wird, die das System auch bei Ausfall einer der Beeinflussungsantennen noch voll funktionsfähig hält.

Eine Weiterbildung der Erfindung nach Anspruch 5 bezieht sich speziell auf Schaltleistensysteme, wobei im Sensorstromkreis ein von herkömmlichen Schaltleisten an sich bekannter Endwiderstand vorgesehen ist. Diese Auslegung ermöglicht die Erkennung einer fehlerhaften Unterbrechung des Sensorstromkreises, da im Normalbetrieb noch ein gewisser Strom über den Endwiderstand fließen kann und sich dieser Sensorstromkreiszustand somit von dem Fehlerfall unterscheiden lässt, bei dem der Sensorstromkreis ganz unterbrochen ist.

Eine Weiterbildung der Erfindung nach Anspruch 6 bezieht sich ebenfalls auf Schaltleistensysteme, wobei vorgesehen ist, die auswerteseitige Antenne mit einer ausreichend großen Ausdehnung derart anzuordnen, dass über einen vorgebbaren Ansprechweg der bewegten Schaltleiste hinweg die Übertragungswirkverbindung dieser Antenne mit der in der Schaltleiste eingebauten Transponderantenne ununterbrochen erhalten bleibt. Dies ermöglicht eine lückenlose Systemüberwachung durch die Schaltleiste im kritischen Ansprechbereich bei gleichzeitig unauffälliger, kompakter Anordnung der Transponderantenne in der Schaltleiste.

Eine Weiterbildung der Erfindung nach Anspruch 7 sieht eine spezielle elektrische Verschaltung des taktilen Sensorsystems vor, die so gewählt ist, dass ein Funktionsausfall des taktilen Sensorelementes oder des ihm zugeordneten Transponders oder des drahtlosen Übertragungskanals zwischen Transponder und Auswerteeinheit nicht dazu führt, dass die Auswerteeinheit durch die entsprechende Änderung des empfangenen Transpondersignals fehlerhaft annimmt, es würde der ungestörte Ausgangszustand des Systems vorliegen.

Vorteilhafte Ausführungsformen der Erfindung sind in den Zeichnungen dargestellt und werden nachfolgend beschrieben. Hierbei zeigen:
- Fig. 1: eine schematische Darstellung eines taktilen Sensorsystems vom Schaltleistentyp mit in die Schaltleiste eingebautem und mit dem Sensorstromkreis elektrisch verbundenem Transponder,
- Fig. 2: ein Ersatzschaltbild des Systems von Fig. 1 und
- Fig. 3: ein Ersatzschaltbild für ein taktiles Sensorsystem vom Schaltleistentyp mit Beeinflussungsantennen.

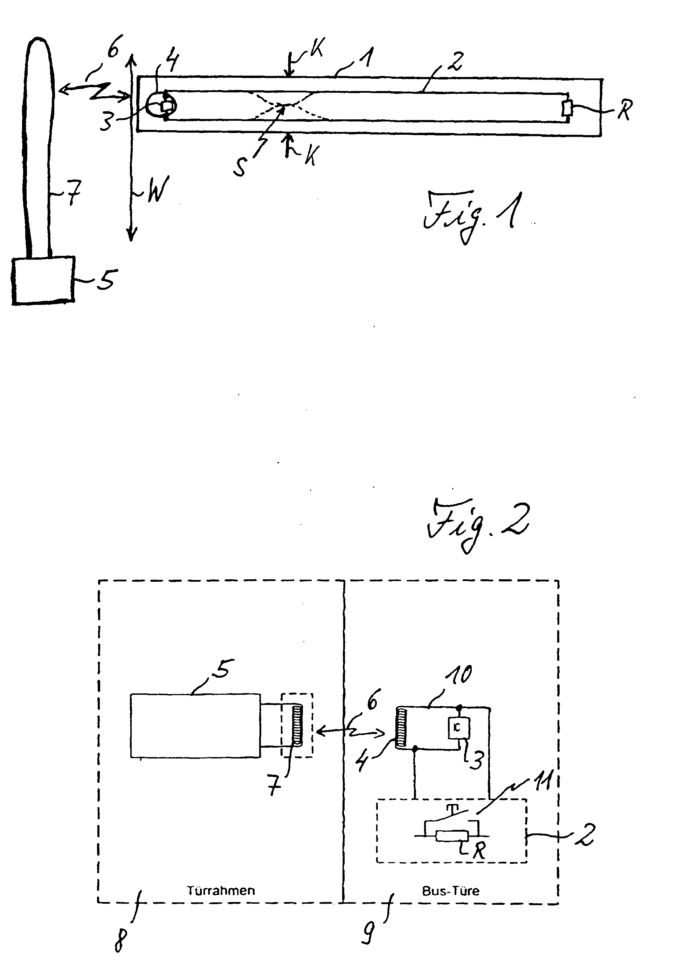

Fig. 1 zeigt schematisch ein System mit einem taktilen Sensorelement in Form einer Schaltleiste 1 von an sich üblichem Aufbau z.B. als Hohlprofil aus einem gummielastischen Material. Im elastischen Schaltleistenmaterial ist als Sensorstromkreis eine Stromschleife 2 verlegt, die an einer Schmalseite von einem Endwiderstand R abgeschlossen ist.

Auf der anderen Schmalseite ist charakteristischerweise eine herkömmliche Transpondereinheit mit Transponderbaustein 3 und Transponderantenne 4 in der Schaltleiste 1 geschützt eingebaut und in den Sensorstromkreis 2 eingeschleift. Die Transpondereinheit steht mit einer Auswerteeinheit 5 über einen drahtlosen Übertragungskanal 6 in Verbindung, zu dem neben der transponderseitigen Antenne 4 eine auswerteseitige Antenne 7 gehört, die an die Auswerteeinheit 5 angeschlossen ist. Der drahtlose Übertragungskanal 6 mit den beiden zugehörigen Antennen 4, 7 ist so ausgelegt, dass zum einen die zum Betrieb des Transponderbausteins 3 und des Sensorstromkreises 2 notwendige Energie von der Auswerteeinheit 5 zur Schaltleiste 1 und zum anderen ein Transponder-Meldesignal von der Schaltleiste 1 zur Auswerteeinheit 5 übertragen werden kann.

Die Schaltleiste 1 befindet sich in nicht näher gezeigter, herkömmlicher Weise als Einklemmschutz an einem relativ zu einem stationären Bauteil beweglichen Bauteil, z.B. an einer Fahrzeugtür. Ein drohendes Einklemmen wird von der Schaltleiste 1 dadurch gemeldet, dass durch die dann einwirkende Klemmkraft K die beiden einander gegenüberliegenden Abschnitte der Stromschleife 2 an einer entsprechenden Stelle S in Berührkontakt kommen, wie in Fig. 1 gestrichelt angedeutet, wodurch der Sensorstromkreis kurzgeschlossen, d.h. der Endwiderstand R überbrückt wird. Diese sprungartige Widerstandsänderung des Sensorstromkreises 2 wird dann von der Auswerteeinheit 5 über die Transponderanordnung 3, 4 drahtlos detektiert.

Üblicherweise ist gefordert, dass die Ansprechfähigkeit der Schaltleiste 1 ununterbrochen über einen bestimmten Ansprechweg W hinweg gegeben ist, der dem gesamten Bewegungsweg der Schaltleiste 1 oder einem Teilbereich desselben entspricht. Dementsprechend muss der Übertragungswirkbereich des drahtlosen Übertragungskanals 6 mindestens diesen Ansprechweg W umfassen. Dazu ist die auswerteseitige Antenne 7 geeignet in einer räumlich ausgedehnten Schleife entlang des Ansprechweges W derart verlegt, dass sie ununterbrochen mit der Transponderantenne 4 in Wirkverbindung bleibt, solange sich die Schaltleiste 1 innerhalb des Ansprechweges W bewegt.

Vorliegend genügt schon die Verwendung eines sehr einfachen Transponderbausteins 3, der lediglich in der Lage sein muss, ein spezifisches Signal, hier als Meldesignal bezeichnet, kontinuierlich oder periodisch auszusenden. Hingegen braucht er nicht zwingend eine eigene Auswerteintelligenz zu besitzen, so dass der Transponderbaustein 3 mit relativ wenig Energie betreibbar ist, die problemlos über den drahtlosen Übertragungskanal 6 elektromagnetisch zugeführt werden kann, z.B. induktiv. Dadurch erübrigt sich eine eigene Energiequelle für den Transponder 3, 4, der folglich sehr kompakt in der Schaltleiste 1 untergebracht werden kann.

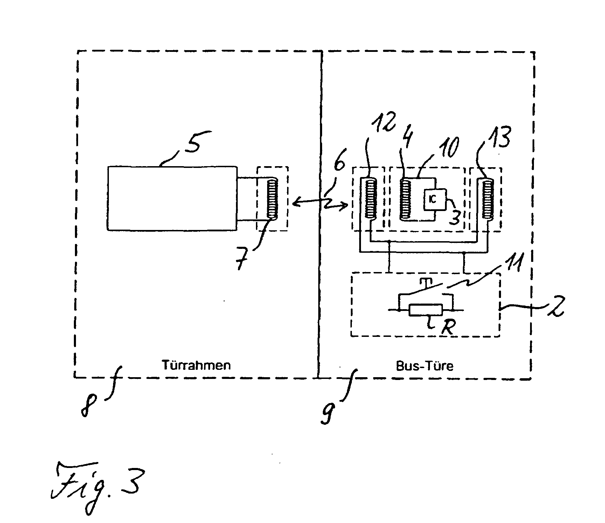

Die genauere Funktionsweise des Systems von Fig. 1 wird nachfolgend unter Bezugnahme auf Fig. 2 näher erläutert, die das System von Fig. 1 in einem Ersatzschaltbild für den speziellen Verwendungszweck an einer Türe eines Omnibusses zeigt. Dabei befindet sich die Auswerteeinheit 5 mit ihrer zugehörigen Antenne 7 an geeigneter Stelle an einem Türrahmen 8. Die Schaltleiste mit dem Sensorstromkreis 2 befindet sich an geeigneter Stelle einer Bus-Türe 9.

Wie aus Fig. 2 zu erkennen, ist der Sensorstromkreis 2 parallel zur Transponderantenne 4 an den Transponderbaustein 3 angekoppelt, d.h. in einen diesbezüglichen Transponderstromkreis 10 eingeschleift. Die taktile Ansprechfunktionalität des Sensorstromkreises 2, d.h. das den Endwiderstand R überbrückende Kurzschließen des Sensorstromkreises 2, ist im Ersatzschaltbild von Fig. 2 durch einen Schalter 11 symbolisiert, der im Normalbetrieb, d.h. bei nicht ansprechender Schaltleiste 1, geöffnet ist. Das vom Transponderbaustein 3 erzeugte Meldesignal wird über den Transponderstromkreis 10 und die Transponderantenne 4 zur Auswerteseite übertragen.

Im Normalzustand, d.h. bei nicht ansprechender Schaltleiste 1, zweigt der Sensorstromkreis 2 vom Transponderstromkreis 10 einen gewissen, kleinen Ruhestrom ab, der über den Endwiderstand R fließt. Das in diesem Zustand von der Transponderanordnung 3, 4 gesendete Meldesignal wird von der Auswerteeinheit 5 dahingehend gewertet, dass es diesen normalen Systemzustand repräsentiert, d.h. den Nichtansprechfall der Schaltleiste. Wenn der Ansprechfall eintritt, entspricht dies einem Schließen des Schalters 11, wodurch der Sensorstromkreis 2 den Transponderstromkreis 10 oder genauer gesagt die Transponderantenne 4 kurzschließt. Durch diesen Nebenschluss wird das vom Transponderbaustein 3 erzeugte Meldesignal ganz oder jedenfalls teilweise über den Sensorstromkreis 2 abgeleitet, so dass nun die Auswerteeinheit 5 über den drahtlosen Übertragungskanal 6 kein Transpondermeldesignal mehr erhält oder jedenfalls ein gegenüber dem Normalzustand-Meldesignal modifiziertes Meldesignal, z.B. ein in seiner Intensität deutlich reduziertes Meldesignal. Aus dieser Änderung des Meldesignals ist die Auswerteeinheit 5 daher in der Lage, eindeutig das Ansprechen der Schaltleiste zu erkennen.

Wenn in der Schaltleiste ein fehlerhafter Leiterbruch des Sensorstromkreises 2 auftritt, hat dies zur Folge, dass der zuvor im normalen Schaltleistenzustand fließende, geringe Ruhestrom des Sensorstromkreises 2 auf null abfällt. Dies hat einen entsprechenden Einfluss auf die Weiterleitung des vom Transponderbaustein 10 erzeugten Meldesignals über den Transponderstromkreis 10 und die Transponderantenne 4, da der Sensorstromkreis 2 dann nicht mehr den Ruhestrom aus dem Transponderstromkreis 10 zieht. Bei Bedarf kann die Auswerteeinheit 5 darauf ausgelegt sein, diese Änderung im empfangenen Meldesignal, beispielsweise in Form einer gewissen Erhöhung der Meldesignalintensität, zu erkennen und dies als einen aufgetretenen Systemfehler zu werten, insbesondere als Leiterbruch in der Schaltleiste.

Wie die obige Funktionsbeschreibung deutlich macht, fungiert der Transponderbaustein 3 als ein rein signalsendendes Bauteil, ohne selbst den Zustand des Sensorstromkreises 2 der Schaltleiste 1 auszuwerten. Eine Änderung des Sensorstromkreiszustands und damit des Schaltleistenzustands wird vielmehr erst von der Auswerteeinheit 5 dadurch erkannt, dass eine solche Zustandsänderung die Übertragung des vom Transponderbaustein 3 erzeugten Meldesignals zur Auswerteeinheit 5 beeinflusst, indem der Sensorstromkreis 2 an den Transponderstromkreis parallel zur Transponderantenne 4 angekoppelt ist. Der Transponderbaustein 3 braucht nur unverändert sein spezifisches Meldesignal kontinuierlich oder in bestimmten Zeitabständen ausgangsseitig abzugeben. Er braucht hingegen nicht den Sensorstromkreiszustand selbst zu erkennen und eine entsprechende Zustandsinformation zu erzeugen und ausgangsseitig abzugeben. Vielmehr erhält die Auswerteeinheit 5 die Information über eine Änderung des Schaltleistenzustands anhand des erst auf seinem Übertragungsweg entsprechend geänderten Meldesignals.

Die Fehlersicherheit des Systems wird dadurch erhöht, dass im fehlerfreien Normalzustand ein ständiges bzw. periodisches Senden und Empfangen des Meldesignals vorgesehen ist. Ein Ausfall oder eine Fehlfunktion einer Systemkomponente wird in aller Regel dazu führen, dass die Auswerteeinheit 5 kein Meldesignal mehr empfängt, d.h. es wird der Fall verhindert, dass die Auswerteeinheit 5 durch den Ausfall oder die Fehlfunktion einer Systemkomponente fehlerhaft darauf schließt, es würde der normale, fehlerfreie Nichtansprechfall vorliegen.

Alternativ zum gezeigten Beispiel mit dem Endwiderstand R sind selbstverständlich auch Realisierungen des erfindungsgemäßen Schaltleistensystems mit eingebautem Transponder 3, 4 ohne Endwiderstand analog zu herkömmlichen Systemen dieses Typs möglich. Des weiteren kann die Erfindung außer in Schaltleistensystemen auch in anderen taktilen Sensorsystemen realisiert sein, insbesondere in Schaltmattensystemen, bei denen das taktile Sensorelement von einer flächig ausgedehnten Schaltmatte herkömmlicher Art mit eingebauter Transponderanordnung 3, 4 gebildet ist. Als weitere Variante des Schaltleistensystems der Fig. 1 und 2 kann die Verwendung einer Schaltleiste mit zwei Sensorstromkreisen zur Bereitstellung einer die Ausfallsicherheit erhöhenden Redundanz vorgesehen sein, wie von herkömmlichen Schaltleisten an sich bekannt.

Eine weitere Variante des in den Fig. 1 und 2 gezeigten Systems ist in einem der Fig. 2 entsprechenden Ersatzschaltbild veranschaulicht, wobei zum leichteren Verständnis funktionell äquivalente Systemkomponenten mit denselben Bezugszeichen bezeichnet sind und insoweit auf die obige Beschreibung zu den Fig. 1 und 2 verwiesen werden kann.

Das Ausführungsbeispiel von Fig. 3 unterscheidet sich von demjenigen der Fig. 1 und 2 in der Art, in welcher der Zustand des Sensorstromkreises 2 die Meldesignalübertragung vom Transponder 3, 4 zur Auswerteeinheit 5 beeinflusst. Speziell wird im Beispiel von Fig. 3 vom Sensorstromkreis nicht in den Transponderschaltkreis 10 eingegriffen, über den die Transponderantenne 4 mit dem das Meldesignal abgebenden Transponderbaustein 3 verbunden ist, sondern an den Sensorschaltkreis 2 sind parallel zwei Beeinflussungsspulen bzw. -antennen 12, 13 angekoppelt. Diese Beeinflussungsspulen 12, 13 sind so angeordnet, dass ihr Wirkbereich mit demjenigen der Transponderantenne 4 überlappt, d.h. mit dem Wirkbereich des drahtlosen Übertragungskanals 6.

Dies hat zur Folge, dass bei einer Änderung des Sensorstromkreiszustands über die Beeinflussungsspulen 12, 13 das elektromagnetische Feld im Wirkbereich des Übertragungskanals 6 eine entsprechende Änderung erfährt, die ihrerseits eine entsprechende Änderung des von der Transponderantenne 4 unverändert abgestrahlten Meldesignals hervorruft, so dass die Auswerteeinheit 5 wiederum ein in Abhängigkeit von der Änderung des Sensorstromkreiszustands modifiziertes Meldesignal empfängt, aus dem sie durch Auswertung diese Zustandsänderung des Sensorstromkreises 2 der Schaltleiste extrahiert. Grundsätzlich genügt hierfür bereits eine Beeinflussungsspule, die gezeigte Anordnung zweier Beeinflussungsspulen 12, 13 stellt jedoch eine Redundanz bereit, welche die Auswahlsicherheit des Systems erhöht. Außerdem kann dadurch gegebenenfalls eine stärkere Beeinflussung und damit Modifikation der Meldesignalübertragung erzielt werden, was die Signalauswertung erleichtert.

Die Funktionsweise des Beispiels von Fig. 3 ergibt sich analog zu derjenigen von Fig. 2. Im normalen Nichtansprechfall kann über den Sensorstromkreis ein allenfalls geringer Strom über den hochohmigen Widerstand R fließen, so dass die Beeinflussungsspulen 12, 13 die Meldesignalübertragung allenfalls geringfügig stören, d.h. in diesem Fall entspricht das von der Auswerteeinheit 5 empfangene Meldesignal weitgehend dem vom Transponderbaustein 3 abgegebenen Meldesignal. Im Ansprechfall ist der Sensorstromkreis kurzgeschlossen, d.h. niederohmig, so dass die Beeinflussungsspulen 12, 13 einen signifikanten Energiebetrag aus der Meldesignalübertragung aufnehmen können und auf diese Weise als Bedämpfungsspulen wirken. Dies führt zu einer merklichen Dämpfung der Meldesignalübertragung, so dass die Auswerteeinheit 5 den Ansprechfall an einem deutlichen Absinken der Intensität des empfangenen Meldesignals erkennt. Zur Erfüllung dieser Bedämpfungsfunktion werden die Beeinflussungsspulen 12, 13 geeignet auf den jeweiligen Transpondertyp abgestimmt. Wenn ein fehlerhafter Leiterbruch im Sensorstromkreis 2 auftritt, stoppt dies jeglichen Stromfluss durch den Sensorstromkreis 2 hindurch, was zu einer entsprechenden Änderung des Bedämpfungsverhaltens der Beeinflussungsspulen 12, 13 und einer damit einhergehenden Meldesignalmodifikation führt, die bei Bedarf von der Auswerteeinheit 5 zusätzlich erkannt werden kann.

Im übrigen gelten für das Beispiel von Fig. 3 dieselben Vorteile und Eigenschaften, wie sie oben zu dem Beispiel der Fig. 1 und 2 angegeben wurden. Insbesondere kommt auch das Beispiel von Fig. 3 mit einem einfachen, rein sendenden Transponderbaustein 3 ohne Auswerteintelligenz aus, und das im normalen Betrieb vorgesehene, ständige bzw. periodische Übertragen des Meldesignals gewährleistet, dass bei Ausfall einer Systemkomponente die Auswerteeinheit 5 aus dem ausbleibenden Empfang des Meldesignals nicht fälschlicherweise auf das Vorliegen des normalen Betriebszustands schließt.

Es versteht sich, dass die Erfindung neben den oben beschriebenen weitere vorteilhafte Realisierungen umfasst. So lässt sich die Erfindung auch für Schaltleistensysteme als Einklemmschutz an Fahrzeugfenstem und anderen, gegen Einklemmen zu schützenden bewegten Bauteilen auf dem Fahrzeugsektor und auf anderen Gebieten einsetzen. Bei der mit einer oder mehreren Beeinflussungsspulen arbeitenden Systemvariante kann der Transponderbaustein und/oder die Transponderantenne bei Bedarf auch außerhalb des taktilen Schaltelementes angeordnet sein.

## Patentansprüche

1. Taktiles Sensorsystem, insbesondere Einklemmschutzsystem, mit
- einem taktilen Sensorelement (1) mit zugehörigem Sensorstromkreis (2),
- einem dem Sensorelement zugeordneten Transponderbaustein (3) mit zugehöriger Transponderantenne (4),
- einer Auswerteeinheit (5) mit zugehöriger auswerteseitiger Antenne (7) zur Auswertung des Sensorstromkreiszustands und
- einem drahtlosen Übertragungskanal (6), der die Transponderantenne (4) und die auswerteseitige Antenne (7) umfasst, zur Energieübertragung von der Auswerteeinheit zum Transponderbaustein und zur Signalübertragung vom Transponderbaustein zur Auswerteeinheit,
**dadurch gekennzeichnet, dass**
- von dem Transponderbaustein (3) und der Transponderantenne (4) wenigstens der Transponderbaustein (3) innerhalb einer elastischen Einkleidung oder Ummantelung einer als taktiles Sensorelement fungierenden Schaltleiste (1) oder Schaltmatte eingebaut ist.

2. Taktiles Sensorsystem nach Anspruch 1, weiter **dadurch gekennzeichnet, dass** der Transponderbaustein (3) ohne eigene Signalauswerteintelligenz als signalemittierendes Bauteil realisiert ist und der die Transponderantenne (4) mit dem Transponderbaustein verbindende Transponderstromkreis (10) mit dem Sensorstromkreis (2) elektrisch verbunden ist.

3. Taktiles Sensorsystem nach Anspruch 1 oder 2, weiter **gekennzeichnet durch** wenigstens eine Beeinflussungsantenne (12, 13), die in den Sensorstromkreis (2) eingeschleift ist und deren Wirkbereich mit dem Wirkbereich des drahtlosen Übertragungskanals (6) überlappt.

4. Taktiles Sensorsystem nach Anspruch 3, weiter **dadurch gekennzeichnet, dass** zwei Beeinflussungsantennen (12, 13) vorgesehen sind, die parallel an den Sensorstromkreis (2) angekoppelt sind.

5. Taktiles Sensorsystem nach einem der Ansprüche 1 bis 4, weiter **dadurch gekennzeichnet, dass** das taktile Sensorelement eine Schaltleiste (1) ist, die einen Sensorstromkreis (2) mit Endwiderstand (R) beinhaltet.

6. Taktiles Sensorsystem nach einem der Ansprüche 1 bis 5, weiter **dadurch gekennzeichnet, dass** das taktile Sensorelement eine bewegte Schaltleiste (1) ist und die auswerteseitige Antenne (7) ausgedehnt derart angeordnet ist, dass sie über einen vorgebbaren Ansprech-Bewegungsweg (W) der Schaltleiste hinweg in ständiger Wirkverbindung mit der im Sensorelement eingebauten Transponderantenne (4) bleibt.

7. Taktiles Sensorsystem nach einem der Ansprüche 1 bis 6, weiter **dadurch gekennzeichnet, dass** die elektrische Verschaltung so gewählt ist, dass im normalen Nichtansprechfall des taktilen Sensorelements der Transponderbaustein (3) kontinuierlich oder in vorgebbaren Zeitabständen ein Meldesignal erzeugt und dieses über den drahtlosen Übertragungskanal (6) zur Auswerteeinheit (5) übertragen wird.

## Claims

1. Tactile sensor system, especially an anti-pinch protection system, comprising:
- a tactile sensor element (1) with an associated sensor circuit (2),
- a transponder device (3) assigned to the sensor element with an associated transponder antenna (4),
- an evaluation unit (5) with an associated evaluation-side antenna (7) to evaluate the sensor circuit state, and
- a wireless transmission channel (6) that comprises the transponder antenna (4) and the evaluation-side antenna (7) for transmitting energy from the evaluation unit to the transponder device, and for signal transmission from the transponder device to the evaluation unit,
**characterized in that**:
- at least the transponder device (3) of the transponder device (3) and the transponder antenna (4) is installed in an elastic cover or sheath of a switch strip (1) or a switch mat functioning as the tactile sensor element.

2. Tactile sensor system according to claim 1, further **characterized in that** the transponder device (3) is designed without own signal evaluation intelligence as a signal-emitting device, and the transponder circuit (10) connecting the transponder antenna (4) with the transponder device is electrically connected to the sensor circuit (2).

3. Tactile sensor system according to claim 1 or 2, further **characterized by** at least one influencing antenna (12, 13) that is looped in the sensor circuit (2) and whose operating range overlaps the operating range of the wireless transmission channel (6).

4. Tactile sensor system according to claim 3, further **characterized in that** two influencing antennas (12, 13) are provided which are parallel connected to the sensor circuit (2).

5. Tactile sensor system according to one of claims 1 to 4, further **characterized in that** the tactile sensor element is a switch strip (1) that contains a sensor circuit (2) with a termination resistor (R).

6. Tactile sensor system.according to one of claims 1 to 5, further **characterized in that** the tactile sensor element is a moved switch strip (1), and the evaluation-side antenna (7) is extendedly arranged so that it remains in continuous operating connection with the transponder antenna (4) installed in the sensor element along a predeterminable response movement path (W) of the switch strip.

7. Tactile sensor system according to one of claims 1 to 6, further **characterized in that** the electrical circuitry is chosen such that when the tactile sensor element is in a normal state of non-actuation the transponder device (3) generates a message signal continuously or at settable intervals, and the message signal is transmitted via the wireless transmission channel (6) to the evaluation unit (5).

## Revendications

1. Système capteur tactile, plus particulièrement système de protection anti-coincement, comprenant
- un élément capteur tactile (1) avec circuit électrique de capteur correspondant (2)
- un module transpondeur (3) affecté à l'élément capteur avec antenne de transpondeur correspondante (4)
- une unité de traitement (5) avec antenne de traitement correspondante (7) pour l'analyse de l'état du circuit électrique du capteur, et
- un canal de transmission sans fil (6), qui comprend l'antenne du transpondeur (4) et l'antenne de traitement (7), pour la transmission de l'énergie de l'unité de traitement vers le module transpondeur et pour la transmission des signaux du module transpondeur vers l'unité de traitement,
**caractérisé par le fait que**
- parmi le module transpondeur (3) et l'antenne de transpondeur (4), le module transpondeur (3) au moins est intégré à l'intérieur d'un habillage ou d'une gaine élastique d'une réglette de contact (1) ou d'un tapis de contact faisant fonction d'élément capteur tactile.

2. Système capteur tactile suivant la revendication 1, également **caractérisé par le fait que** le module transpondeur (3) est réalisé, sans intelligence d'analyse de signaux propre, comme un composant émetteur de signaux et que le circuit électrique du transpondeur (10) raccordant l'antenne du transpondeur (4) au module transpondeur est relié électriquement au circuit électrique du capteur (2).

3. Système capteur tactile suivant la revendication 1 ou 2, également **caractérisé par** au moins une antenne d'influence (12, 13), qui est intégrée dans la boucle du circuit électrique du capteur (2) et dont la zone d'action est superposée à la zone d'action du canal de transmission sans fil (6).

4. Système capteur tactile suivant la revendication 3, également **caractérisé par le fait que** sont prévues deux antennes d'influence (12, 13) qui sont couplées en parallèle au circuit électrique du capteur (2).

5. Système capteur tactile suivant l'une des revendications 1 à 4, également **caractérisé par le fait que** l'élément capteur tactile est une réglette de contact (1) comprenant un circuit électrique de détection (2) avec une résistance terminale (R).

6. Système capteur tactile suivant l'une des revendications 1 à 5, également **caractérisé par le fait que** l'élément capteur tactile est une réglette de contact mobile (1) et que l'antenne de traitement (7) est étendue et disposée de telle sorte qu'elle reste en liaison active permanente avec l'antenne du transpondeur (4) intégrée dans l'élément capteur sur une course sensible (W) prédéfinissable de la réglette de contact.

7. Système capteur tactile suivant l'une des revendications 1 à 6, également **caractérisé par le fait que** le branchement électrique est choisi de telle sorte que, dans un cas normal de non-réaction de l'élément capteur tactile, le module transpondeur (3) émet un signal d'avertissement en continu ou à des intervalles prédéfinissables et que ce signal est transmis à l'unité de traitement (5) via le canal de transmission sans fil (6).
